# EUROPEAN PATENT SPECIFICATION

(11) **EP 2 082 922 B1**
(45) Date of publication and mention of the grant of the patent: **24.04.2013**
(21) Application number: 09000926.7
(22) Date of filing: 23.01.2009
(51) Int. Cl.: B60R 9/06, B60R 9/10

(54) **Carrier device, in particular for bicycles**
Träger, insbesondere für Fahrräder
Porte-charge, en particulier pour bicyclettes

(30) Priority: 24.01.2008 NL 1034946
(43) Date of publication of application: 29.07.2009
(73) Proprietor: Fischer, Hermanus, Gerhardus, Johannes, 7544 NK Enschede (NL)
(72) Inventor: Fischer, Hermanus, Gerhardus, Johannes, 7544 NK Enschede (NL)
(74) Representative: Bartelds, Erik

(56) References cited:
- NL-C2- 1 023 396
- US-A- 4 695 218
- US-A- 5 456 564
- US-A1- 2006 231 581

## Description

The invention relates to a carrier device, particularly for cycles. More specifically, the invention relates to a carrier device, particularly for cycles, comprising a base frame for mounting on a vehicle, a height-adjustable carrying frame, at least one pair of arms arranged pivotally between the base frame and the carrying frame, displacing means arranged between the base frame and the carrying frame for moving the carrying frame from a position on or just above the ground to a highest position at a safe transporting height above the ground. Such a carrier device, which is intended for mounting on a tow hook at the rear side of a vehicle, is known from NL-C2-1023396.

Conventional carrier devices usually comprise a substantially L-shaped frame, the upright part of which is directed toward the vehicle and the lying part of which is directed to the rear. The upright part is usually provided with means for mounting the carrier device on the vehicle. These mounting means can usually be mounted on a tow hook of the vehicle. The lying frame part generally supports a narrow platform or one or more channels which extend in transverse direction behind the vehicle and on which one or more cycles can be placed.

In order to prevent it from making contact with the road when the vehicle is driven, the known carrier device must be mounted relatively high on the vehicle. This entails the drawback that it is not easy to place a cycle on this carrier device. This is particularly the case with cycles with so-called pedal assist. These are cycles provided with an electric motor in the hub of the front or rear wheel, this motor being powered by rechargeable batteries. Such a cycle with pedal assist is about 10 kg - or 50 percent - heavier than a conventional cycle.

The prior art document NL-C2-1023396 discloses a load carrier for carrying bicycles and the like. The load carrier includes a fastener part that is secured to the tow hook of a vehicle and a base parte that is fixed to the fastener part. A load support part is movable supported from the base part by two pairs of hinged arms. The load support part is movable between a raised position for transport and a lowered position for (un)loading. Movement of the load support part is by means of a hydraulic cylinder and a manual pump; other electrically driven constructions can also be envisaged.

The invention therefore has for its object to improve a carrier device of the above described type. According to the invention this is achieved in such a carrier device, in that the displacing means comprise a screw spindle, and the carrier device comprises means for fixing the carrying frame in its highest position relative to the base frame, the fixation means coupling the carrying frame relative to the base frame mechanically to each other, more specifically coupling the carrying frame to the displacing means pivotally mounted on the base frame,

By making use of a carrying frame which is height-adjustable a cycle can be easily placed on or removed from the carrier device in simple manner by moving the carrying frame downward to the ground or just above it. When the cycle has been placed on the carrying frame, this frame can be readily moved to a safe transporting height above the ground by operating the displacing means, and there be fastened to the base frame by the fixation means.

Preferred embodiments of the carrier device according to the invention are described in the dependent claims.

The invention is now elucidated on the basis of an embodiment, wherein reference is made to the accompanying drawing, in which:

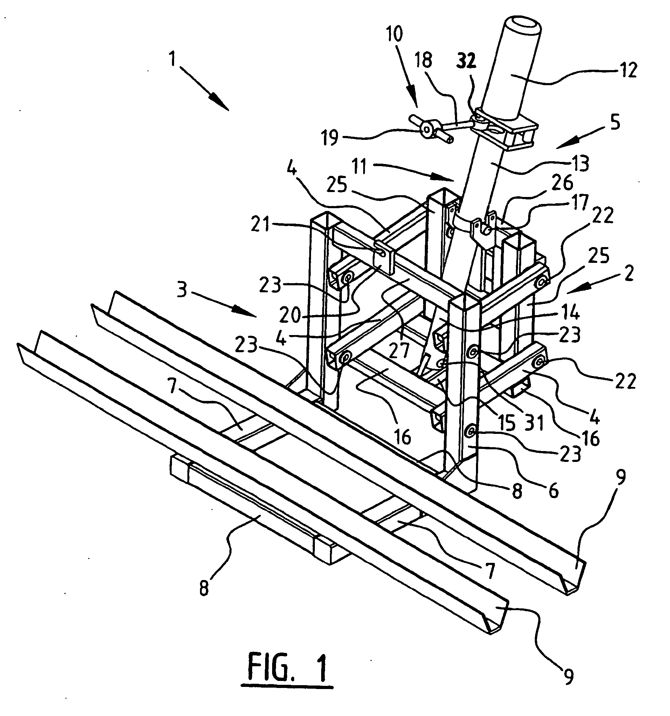

Fig. 1 is a perspective view of a carrier device according to the invention in an intermediate position,

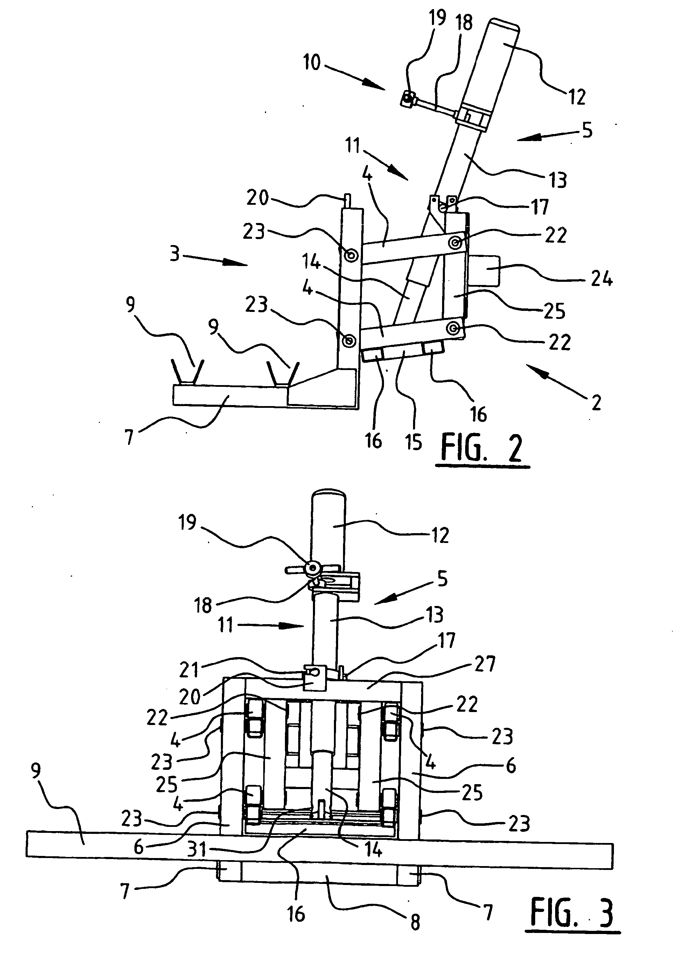

Fig. 2 and 3 show respectively a side view and a rear view of the carrier device of fig. 1, and
Fig. 4 is a side view of the carrier device in mounted position behind a vehicle, wherein the carrying frame is shown at the transporting height and in the lowered position.
A carrier device 1 for cycles B according to the invention comprises a base frame 2 to be mounted on a vehicle V, a height-adjustable carrying frame 3 and two pairs of mutually parallel arms 4 arranged between base frame 2 and carrying frame 3. Arms 4 are pivotable about shafts 22 relative to base frame 2 and pivotable about shafts 23 relative to carrying frame 3. Carrier device 1 further comprises displacing means 5 arranged between base frame 2 and carrying frame 3, as well as means 10 for fixing carrying frame 3 in its highest position relative to base frame 2.

Carrying frame 3 is L-shaped and comprises two posts 6 and two longitudinal beams 7. These longitudinal beams 7 are connected by cross beams 8, while posts 6 are also connected at the top by a cross beam 27. Arranged on longitudinal beams 7 are two channels 9 which run in transverse direction and in which wheels W of cycle B can be placed. Fewer or more than two channels can of course be provided, while other forms of carrier can also be envisaged.

Base frame 2 is formed by two posts 25 which are connected by a number of cross beams 26, one of which forms the upper mounting point for displacing means 5. Similarly, lower arms 4 are mutually connected by two cross beams 16, between which is once again arranged a longitudinal beam 15 which forms the lower mounting point for displacing means 5.

In accordance with the invention, displacing means 5 comprise a screw spindle 11, an upper part 13 of which is mounted on cross beam 26 of base frame 2 for pivoting about a shaft 17, while a lower end 14 of screw spindle 11 is mounted on longitudinal beam 15 between lower arms 4 for pivoting about a shaft 31. Screw spindle 11 is driven here by an electric motor 12 mounted thereon.

On the other hand, the drive of displacement means could also take place manually, for instance by means of a handwheel or handle.

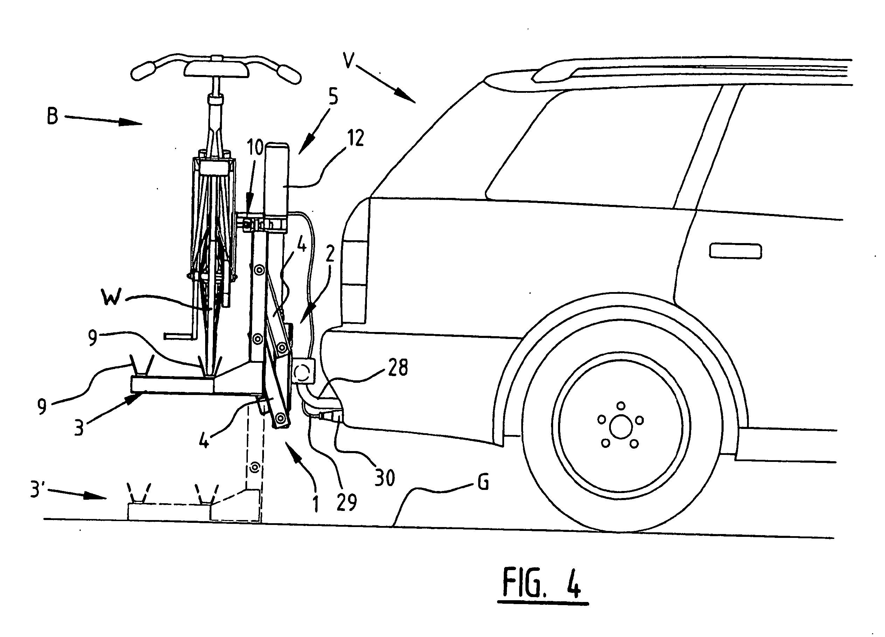

In the case of motor driving, the user for instance has available a control box (not shown here) with two push buttons, one for downward movement and one for upward movement. When a push button is pressed, the carrying frame moves upward or downward and when the push button is released the carrying frame stops. In addition, the motor stops automatically when the carrying frame reaches its uppermost end position (shown with full lines in fig. 4) or its lowermost end position (shown in broken lines).

Carrier device 1 is intended for mounting on a tow hook 28 of vehicle V. Base frame 2 is provided for this purpose with a receiving part 24 in which the ball of tow hook 28 can be fastened. Once carrier device 1 has been arranged on tow hook 28, motor 12 of screw spindle 11 can be connected by means of a cable 29 to a 12 Volt connection 30 of vehicle V.

Carrier device 1 according to the invention now operates as follows. When carrying frame 3 is at its lowest level, cycle B is wheeled onto one of the channels 9 without being lifted, and secured on carrying frame 3 in the usual manner by means of a mechanical clamp on the frame tube of cycle B. Channel 9 is otherwise constructed such that the front and rear wheels stop at the correct position, after which both wheels W are secured to channel 9 with a tensioning belt. Carrying frame 3 is moved into the highest position by operating displacing means 5 before this is done. In this highest position the carrying frame 3 is then locked mechanically to base frame 2 by fixation means 10, so that carrying frame 3 cannot move downward for any reason whatsoever during transport, which could result in dangerous situations. Fixation means 10 otherwise also relieve the load on displacing means 5, whereby they will wear less.

Fixation means 10 comprise co-acting locking elements connected to respectively base frame 2 and carrying frame 3. In the shown example these locking element comprise a male element in the form of a locking bolt 18 connected to base frame 2, and a female element in the form of an opening 21 connected to carrying frame 3 for the purpose of receiving locking bolt 18. According to the invention, locking bolt 18 is arranged pivotally about an upright shaft 32 between the upper part 13 of screw spindle 11 and motor 12, while opening 21 is formed in a plate 20 mounted on upper cross beam 27 of carrying frame 3. Arranged on locking bolt 18 is a locking bolt 19 with which locking bolt 18 can be fixed in opening 21.

Although the invention has been elucidated above on the basis of an embodiment, it will be apparent that it can be varied in many ways. The scope of the invention is therefore defined solely by the following claims.

## Claims

1. Carrier device (1), particularly for cycles (13), comprising:
- a base frame (2) for mounting on a vehicle (V),
- a height-adjustable carrying frame (3),
- at least one pair of arms (4) arranged pivotally between the base frame (2) and the carrying frame (3),
- displacing means (5) arranged between the base frame (2) and the carrying frame (3) for moving the carrying frame (3) from a position on or just above the ground to a highest position at a safe transporting height above the ground,
**characterized in that**:
the displacing means (5) comprise a screw spindle (11), and
the carrier device (1) comprises means for fixing the carrying frame (3) in its highest position relative to the base frame (2), the fixation means (10) coupling mechanically the carrying frame (3) to the displacing means (5) pivotally mounted on the base frame (2).

2. Carrier device (1) as claimed in claim 1,
**characterized in that**
a fixed part (13) of the screw spindle (11) is connected to one of the frames (2, 3) and a movable part (14) of the screw spindle (11) to the other frame (3, 2).

3. Carrier device (1) as claimed in any of the foregoing claims,
**characterized in that**
the displacing means (5) can be operated manually.

4. Carrier device (1) as claimed in any of the claims 1-3,
**characterized in that**
the displacing means (5) are electrically drivable.

5. Carrier device as claimed in any of the foregoing claims,
**characterized in that**
the fixation means (10) comprise co-acting locking elements connected to respectively the base frame (2) and the carrying frame (3).

6. Carrier device (1) as claimed in claim 7,
**characterized in that**
the locking elements comprise a male element, such as a locking bolt (18), connected to one of the frame (3) and displacing means (5) and a female element, such as an opening (21), connected to one of the displacing means (5) and frame (3).

## Patentansprüche

1. Trägervorrichtung (1), insbesondere für Zweiräder (13), mit:
- einem Basisrahmen (2) für eine Anbringung an ein Fahrzeug (V),
- einem höheneinstellbaren Trägerrahmen (3),
- zumindest einem Paar Arme (4), die zwischen dem Basisrahmen (2) und dem Trägerrahmen (3) schwenkbar angeordnet sind,
- einer Versatzeinrichtung (5), die zwischen dem Basisrahmen (2) und dem Trägerrahmen (3) angeordnet ist, um den Trägerrahmen (3) von einer Position an oder direkt über dem Boden zu einer höchsten Position auf eine sichere Transporthöhe über dem Boden zu bewegen,
**dadurch gekennzeichnet, dass**:
die Versatzeinrichtung (5) eine Schraubspindel (11) aufweist, und
die Trägervorrichtung (1) eine Einrichtung zum Befestigen des Trägerrahmens (3) an dessen höchsten Position relativ zu dem Basisrahmen (2) aufweist, wobei die Befestigungseinrichtung (10) den Trägerrahmen (3) mechanisch an die Versatzeinrichtung (5) koppelt, die schwenkbar an dem Basisrahmen (2) angebracht ist.

2. Trägervorrichtung (1) gemäß Anspruch 1,
**dadurch gekennzeichnet, dass**
ein fester Teil (13) der Schraubspindel (11) mit einem der Rahmen (2, 3) und ein bewegbarer Teil (14) der Schraubspindel (11) mit dem anderen Rahmen (3, 2) verbunden ist.

3. Trägervorrichtung (1) gemäß einem der vorherigen Ansprüche,
**dadurch gekennzeichnet, dass**
die Versatzeinrichtung (5) manuell betätigt werden kann.

4. Trägervorrichtung (1) gemäß einem der Ansprüche 1 bis 3,
**dadurch gekennzeichnet, dass**
die Versatzeinrichtung (5) elektrisch antreibbar ist.

5. Trägervorrichtung gemäß einem der vorherigen Ansprüche,
**dadurch gekennzeichnet, dass**
die Befestigungseinrichtung (10) zusammenwirkende Verriegelungselemente aufweist, die mit dem Basisrahmen (2) bzw. dem Trägerrahmen (3) verbunden sind.

6. Trägervorrichtung (1) gemäß Anspruch 7,
**dadurch gekennzeichnet, dass**
die Verriegelungselemente ein Steckerelement, wie zum Beispiel einen Verriegelungsbolzen (18), das mit dem Rahmen (3) oder der Einrichtung (5) verbunden ist, und ein Buchsenelement, wie zum Beispiel eine Öffnung (21), aufweist, das mit der Versatzeinrichtung (5) oder dem Rahmen (3) verbunden ist.

## Revendications

1. Porte-charge (1) en particulier pour des cycles (13) comprenant :
- un bâti de base (2) destiné à être monté sur un véhicule (V),
- un bâti de support réglable en hauteur (3),
- au moins une paire de bras (4) agencée de manière pivotante entre le bâti de base (2) et le bâti de support (3),
- des moyens de déplacement (5) agencés entre le bâti de base (2) et le bâti de support (3) pour déplacer le bâti de support (3) d'une position sur ou juste au-dessus du sol à la position la plus haute à une hauteur de transport sans danger au-dessus du sol,
**caractérisé en ce que** :
les moyens de déplacement (5) comprennent un arbre fileté (11), et
le porte-charge (1) comprend des moyens pour fixer le bâti de support (3) dans sa position la plus haute par rapport au bâti de base (2), les moyens de fixation (10) couplant mécaniquement le bâti de support (3) aux moyens de déplacement (5) montés de manière pivotante sur le bâti de base (2).

2. Porte-charge (1) selon la revendication 1,
**caractérisé en ce que**
une partie fixe (13) de l'arbre fileté (11) est raccordée à l'un des bâtis (2, 3) et une partie mobile (14) de l'arbre fileté (11) à l'autre bâti (3, 2).

3. Porte-charge (1) selon l'une quelconque des revendications précédentes,
**caractérisé en ce que**
les moyens de déplacement (5) peuvent être actionnés manuellement.

4. Porte-charge (1) selon l'une quelconque des revendications 1 à 3,
**caractérisé en ce que**
les moyens de déplacement (5) peuvent être entraînés électriquement.

5. Porte-charge selon l'une quelconque des revendications précédentes,
**caractérisé en ce que**
les moyens de fixation (10) comprennent des éléments de blocage coopératifs raccordés respectivement au bâti de base (2) et au bâti de support (3).

6. Porte-charge (1) selon la revendication 7,
**caractérisé en ce que**
les éléments de blocage comprennent un élément mâle tel qu'un boulon de blocage (18), raccordé à l'un parmi le bâti (3) et les moyens de déplacement (5) et un élément femelle tel qu'une ouverture (21) raccordée à l'un parmi les moyens de déplacement (5) et le bâti (3).
